# EUROPEAN PATENT APPLICATION

(11) **EP 1 889 822 A2**
(43) Date of publication of application: **20.02.2008**
(21) Application number: 07253244.3
(22) Date of filing: 17.08.2007
(51) Int. Cl.: C04B 41/85, C04B 41/87, F16D 69/02

(54) **Two piece carbon-carbon pressure plate design for aircraft brakes**

(30) Priority: 18.08.2006 US 505888
(71) Applicant: Honeywell International Inc., Morristown, NJ 07960 (US)
(72) Inventor: Walker, Terence B., South Bend, IN 46619 (US); Booker, Laurie A., South Bend, IN 46637 (US); Waghray, Akshay, Granger, IN 46530 (US)
(74) Representative: Hucker, Charlotte Jane

(57) **Abstract**

This invention relates to a carbon-carbon composite pressure plate for brakes. The pressure plate consists of two sections. The section on the piston side is heavily treated with antioxidant. The section on the non-piston side is given a normal antioxidant treatment. Preferably the heavily treated antioxidant is vacuum pressure impregnated. The antioxidant is typically a standard phosphoric acid based solution. After antioxidant treatment the side that is heavily treated with antioxidant may also be optionally covered with a ceramic coating. This invention solves the problem of providing improved oxidation resistance to aircraft brakes while not adversely affecting the friction properties of the brake pads.

## Description

### Field of the Invention

The field of this invention is carbon-carbon composite articles that are used in aircraft brakes. More specifically, the present invention relates to a two piece carbon-carbon pressure plate for brakes, wherein the pressure plate consists of two halves. One of the halves is preferably vacuum pressure impregnated with an antioxidant.

### Background

Carbon-carbon composites rank high among composite materials with a broad spectrum of properties and applications in a variety of industries. Carbon-carbon composites are made of carbon fibers in various directions, with carbonaceous polymers and hydrocarbons as the matrix precursors. Their density and properties depend on the type and volume fraction of reinforcement, matrix precursor used, and end heat treatment temperature.

Carbon-carbon composites have a wide scope of application in wear-related applications including brake friction materials for vehicles such as aircraft, heavy trucks, and railroads. Carbon/carbon composites generally exhibit low coefficients of friction. Carbon/carbon composites also generally exhibit good wear rates. The friction and wear mechanism of carbon/carbon composites on application of brakes is complicated, and various factors can have a significant impact on the coefficient of friction of the carbon-carbon composite.

Starting materials for carbon-carbon composite brake discs include carbon fibers produced from polyacrylonitrile (PAN), pitch, and mesophase Pitch. Polyacrylonitrile produces fiber material with a somewhat lower modulus, lower density, but a higher strength. Pitch materials have higher modulus, lower strength, higher density, and higher thermal conductivity. By adjusting the form and composition of fibers and matrices, a wide variety of properties can be produced in the carbon-carbon composite materials.

Carbon is prone to reaction with oxygen at temperatures of 450 °C and above. For use of carbon-carbon composites for long durations of time and at high temperatures, it is important that the composites be protected against oxidation. In addition, the oxidation of carbon-carbon composites is catalyzed with various contaminants. This includes, for example, potassium acetate a common constituent in aircraft runway deicers. Thus, pressure plates for aircraft are extremely prone to contamination with material that subsequently catalyzes oxidation of the carbon-carbon composite brake material due to their position in the brake assembly.. Contamination typically occurs on the non-friction or back side of the pressure plate. Oxidation damage leads to premature removal of carbon-carbon brakes from the vehicle.

Antioxidants help protect the carbon-carbon composite discs from oxidizing when they frictionally heat. Antioxidants can decrease the rate of even catalyzed oxidation of carbon-carbon composites by several orders of magnitude.

Antioxidants also protect the carbon-carbon composite discs from reacting with the environment when they are heated frictionally. However, antioxidants are generally well known in the art to have an adverse impact on the friction properties of the carbon-carbon composite, if applied to friction surfaces.

Accordingly, there is a need in the art for carbon-carbon pressure plate designs which improve the oxidation resistance of the carbon-carbon material, but which do not adversely affect the friction properties of the treated material.

### Summary of the Invention

The present invention is directed to a carbon-carbon composite pressure plate for brakes which consists of two sections. Preferably, one section (usually on the piston side) is heavily treated with antioxidant. The other section (typically on the non-piston side) is given only normal antioxidant treatment. Thus the friction properties of the non-piston side are not adversely affected. A highly preferred embodiment is where the piston side is vacuum pressure impregnated with antioxidant. The two sections are bonded together by standard methods known in the art.

Vacuum pressure impregnation provides many advantages over prior art methods of incorporating antioxidant into carbon-carbon composites. Vacuum impregnation impregnates antioxidant into the minute pores of the carbon-carbon composite. Incorporating the antioxidant into the carbon-carbon composite with vacuum impregnation greatly increases the volume and total depth of antioxidant deposited into the carbon-carbon composite. In addition, the antioxidant is incorporated into the interior pores of the carbon-carbon composite, and is not left only on the surface.

The carbon-carbon composites that are used with this invention are any that are known in the art. Preferred are CARBENIX® 4000 and CARBENIX® 2400 both manufactured by Honeywell International, Inc.

The antioxidants that are used with the present invention are any known in the art that can be used with carbon-carbon composite materials. Preferred are phosphoric acid based antioxidant systems.

In addition, the carbon-carbon composite article may be optionally covered with a ceramic overcoating. It is preferred that the ceramic overcoating contains boron nitride, boron carbide, and/or elemental boron.

### Detailed Description of the Invention

The present invention is directed to a two piece carbon-carbon composite pressure plate for brakes comprising two sections of carbon-carbon composite. Preferably one of the sections (usually the piston side) is heavily treated with an antioxidant. The other section (typically on the non-piston side) is given only normal antioxidant treatment. Carbon is prone to reaction with oxygen at temperatures of 450 °C and above. Therefore, for use of these composites at elevated temperatures, it is important that the composites be protected against oxidation.

Preferably the antioxidant is applied via vacuum pressure impregnation which greatly increases both the depth and total volume of antioxidant deposited, and also greatly increases the oxidation resistance. Preferably, the antioxidant is a phosphoric acid type antioxidant solution. Vacuum impregnation places antioxidant into the minute pores of the carbon-carbon composite. Vacuum impregnation is used in a variety of applications, for example, to seal porous parts such as gaskets for transmission housings and power steering pumps to make them impermeable to liquids and gases.

The heavily oxidized (usually backside or piston side) of the assembly can be optionally top coated with a ceramic overcoat. The resulting assembly would then be riveted together in a manner similar to that used in well-known two-for-one refurbishment schemes. This approach allows the backside of the assembly to be reused, reducing cost. The two sections of the pressure plate are bonded together by methods that are known in the art for bonding carbon-carbon composite articles.

**Vacuum impregnation.** The articles may be impregnated with antioxidant using any vacuum impregnation technique that is known in the art. Generally, vacuum impregnation involves first placing the article under a vacuum, then submerging the article in a liquid antioxidant solution. Pressure is then re-applied, which forces the antioxidant into the pores of the article. Excess antioxidant is then wiped from the surface of the article. Vacuum impregnation results in the pores of the article becoming filled with antioxidant, but does not necessarily result in a change in the size or shape of the article.

In one embodiment of the present invention, the carbon-carbon composites are placed into a vacuum chamber. The air is evacuated, opening fine paths within the carbon-carbon composite, which makes the pores receptive to filling with antioxidant. The antioxidant is then introduced onto the surface of the carbon-carbon composite via submersion. The chamber is then pressurized, which forces the antioxidant into the pores of the carbon-carbon composite. This is followed by wiping to clear excess antioxidant from the external surface of the carbon-carbon composite, and removal from the chamber. The process can be done relatively quickly. Typical impregnation times are about 20-25 minutes.

The impregnation process does not alter the external surface, so carbon-carbon brake annular discs require no additional tooling or shaping after the process. Vacuum impregnation is effective in filling surface pores of the carbon-carbon composite as well as cracks and holes that penetrate the part.

**Carbon-carbon composites.** Any carbon carbon-carbon composites that are well known in the art can be used with this invention. Carbon-carbon composites are generally made of fibers, and carbonaceous polymers and hydrocarbons as the matrix. Carbon-carbon composites and methods of their manufacture are well known to those in the art. Carbon-carbon composites are described in Carbon-Carbon Materials and Composites, John D. Buckley and Dan D. Edie, Noyes Publications, 1993, which is incorporated herein by reference. The carbon-carbon composites of the present invention can be made with thermosetting resins as matrix precursors. These materials generally possess low densities 1.55-1.75 g/cm³ and have well-distributed microporosity. Composites made with resins as the matrix generally exhibit high flexural strength, low toughness, and low thermal conductivity.

The carbon-carbon composites of the present invention can also be made with pitch as the matrix precursor. These materials, after densification, can exhibit densities in the range of 1.7-2.0 g/cm³ with some mesopores. The carbon-carbon composites of the present invention can also be made by chemical vapor deposition (CVD). This technique uses hydrocarbon gases, and the carbon-carbon composites that are produced possess intermediate densities, and have matrices with closed porosities. Composites with pitch as the precursor, and the CVD-based composites, can be made with very high thermal conductivity (400-700 W/MK) in the fiber direction.

In one preferred embodiment, the carbon-carbon composites of the present invention are prepared from carbon preforms. Carbon preforms are made of carbon fibers, which can be formed from pre-oxidized acrylonitrile resin. The carbon fibers can be layered together to form a shape, such as a friction brake annular disc. The shape is heated and infiltrated with methane, or another pyrolyzable carbon source, to form the carbon-carbon composite. A carbon-carbon composite prepared in this manner is preferred, and will have a density in the range of about 1.6 g/cm³ to about 1.9 g/cm³. More highly preferred is a carbon-carbon composite with a density of approximately 1.75 g/cm³.

One highly preferred carbon-carbon composite is CARBENIX^{®} 4000. This carbon/carbon composite material is manufactured by Honeywell International, Inc. as an aircraft brake carbon/carbon composite friction material. CARBENIX^{®} 4000 is made of non-woven polyacrylonitrile precursor carbon fibers, densified with carbon utilizing chemical vapor deposition.

Another highly preferred carbon-carbon composite is CARBENIX® 2400, also manufactured by Honeywell International, Inc. CARBENIX® 2400 is an aircraft brake carbon/carbon composite friction material, consisting of pitch precursor carbon fibers, densified with carbonized phenolic resin and with carbon from chemical vapor deposition.

**Antioxidants.** Any antioxidants that can be used to inhibit oxidation in carbon-carbon composites, that are generally known to those of skill in the art can be used with this invention. Antioxidants that can be used with this invention include phosphate coatings of Al, Zn, or Mn, that are brushed on the edges of the brake discs and then charred. Another class of anti-oxidant treatments for carbon and graphite materials, including carbon-carbon composites, is based on using compounds that form a stable complex with active sites on the carbon composite in order to prevent oxidation.

Halogen and organohalogen compounds have been used as oxidation inhibitors at temperatures of up to 900 °C. A concentrated aqueous solution of H₃PO₄ ZnO, A1(OH)₃, CuSO₄ and Cu(NO₃)₂ can also be used to inhibit oxidation at high temperatures. Similar antioxidants are described in U.S. Patent No. 4,837,073 to McAllister et al., which is incorporated herein by reference in its entirety.

A further class of antioxidants that are especially preferred include phosphoric acid penetrants, which can be coated on the carbon/carbon material. These antioxidants significantly improve the oxidative resistance of the carbon-carbon composite at the high end of the typical operating temperature range. These antioxidants are also effective in the presence of high concentrations of known oxidation catalysts, such as potassium acetate, a common constituent in aircraft runway deicers.

Such a phosphoric acid-based penetrant salt solution may contain the ions formed from the combination of one or more of the following: 10-80 wt% H₂O, 20-70 wt % H₃PO₄, 0-25 wt % MnHPO₄·1.6H₂O, 0-30 wt % Al(H₂PO₄)₃, 0-2 wt % B₂O₃, 0-10 wt % Zn₃ (PO₄)₂ and 0.1-25 wt % alkali metal mono-, di-, or tri-basic phosphate. Such antioxidants suitable for use with this invention are described in U.S. Patent No. 6,455,159 to Walker et al., which is incorporated herein by reference in its entirety.

**Ceramic coatings.** This invention also contemplates the carbon-carbon composite article having a component that is covered by a ceramic overcoating. It is preferred that the boron-containing glass overcoating contains boron nitride, boron carbide, and/or elemental boron.

Preferably, the ceramic overcoating comprises, on a solids basis, 20-50 wt-% (preferably 35-50 wt-%) alkali or alkaline earth metal silicate, 3-25 wt-% (preferably 4-20 wt-%) alkali metal hydroxide, up to 10 wt-% (preferably 1-6 wt-%) boron nitride, and one or both of 5-40 wt-% elemental boron and 5-40 wt-% boron carbide (preferably 25-40 wt-% elemental boron). The ceramic overcoating is also preferably substantially free of phosphoric acid and phosphates.

In a highly preferred embodiment, the boron-containing glass overcoating comprises 40 wt-% alkali metal silicate, 19 wt-% alkali metal hydroxide, 3 wt-% boron nitride, and 38 wt-% elemental boron.

Ceramic overcoatings suitable for use with this invention are described for example in U.S. 6,884,467 to Walker et. Al. and US 2005/0170182 to Walker et al. both of which are incorporated herein by reference in their entireties.

### EXAMPLE 1 - VACUUM IMPREGNATION OF CARBON-CARBON BRAKE DISCS WITH ANTIOXIDANT

The carbon-carbon composite brake pads are first cleaned to remove any oils or moisture from the pores. The brake pads are then placed in an vacuum-pressure vessel.

A vacuum of at least 29" of mercury is drawn in the autoclave, evacuating the air in the pores of the carbon-carbon brake pads.

After a period of time under vacuum, the antioxidant, in a liquid form, is introduced into the vessel. The carbon-carbon substrate is then submerged in the antioxidant solution and the autoclave is then pressurized to 100 pounds per square inch, forcing the antioxidant deep into the pores of the brake pads.

After a period of time, the antioxidant is returned to a storage tank. The pressure is reduced and the vessel is opened.

The brake annular discs are removed, and the excess antioxidant is allowed to drain from the parts.

Total processing time is about 2 hours.

The preferred embodiment given above is an example of the invention, and is not intended to define the full scope of the invention. One skilled in the art would recognize many variations that would also be encompassed by the claims.

## Claims

1. A two piece carbon-carbon composite pressure plate for aircraft brakes comprising two sections of carbon-carbon composite.

2. The carbon-carbon composite pressure plate of claim 1, wherein the carbon-carbon substrate comprises:
non-woven polyacrylonitrile precursor carbon fibers, densified with carbon utilizing chemical vapor deposition; or
pitch precursor carbon fibers, densified with carbonized phenolic resin and with carbon from chemical vapor deposition.

3. The carbon-carbon composite pressure plate of claim 1, wherein one of the sections is heavily treated with an antioxidant.

4. The carbon-carbon composite pressure plate of claim 3, wherein the antioxidant comprises phosphoric acid.

5. The carbon-carbon composite pressure plate of claim 3, wherein the antioxidant comprises a concentrated aqueous solution of H3PO4 ZnO, Al(OH)3, CuSO4 or Cu(NO3)2, or mixtures thereof.

6. The carbon-carbon composite pressure plate of claim 3, wherein the section that is heavily treated with an antioxidant is additionally coated with a ceramic coating.

7. The carbon-carbon composite pressure plate of claim 6, wherein the ceramic coating comprises on a solids basis:
20-50 wt-% alkali or alkaline earth metal silicate;
3-25 wt-% alkali metal hydroxide;
up to 10 wt-% boron nitride; and
one or both of 5-40 wt-% elemental boron and 5-40 wt-% boron carbide.

8. A two piece carbon-carbon composite pressure plate for aircraft brakes comprising two sections of carbon-carbon composite, wherein one section is vacuum pressure impregnated with an antioxidant.

9. The carbon-carbon composite pressure plate of claim 8, wherein the antioxidant comprises phosphoric acid.

10. The carbon-carbon composite pressure plate of claim 8, wherein the section that is vacuum pressure impregnated with an antioxidant is additionally coated with a ceramic coating.
